# EUROPÄISCHE PATENTSCHRIFT

(11) **EP 1 262 397 B1**
(45) Veröffentlichungstag und Bekanntmachung des Hinweises auf die Patenterteilung: **20.09.2006**
(21) Anmeldenummer: 02007811.9
(22) Anmeldetag: 06.04.2002
(51) Int. Cl.: B62D 25/10, B60R 21/34

(54) **Fronthaubenanordnung für einen Personenkraftwagen**
Front bonnet for a passenger car
Capot avant pour une voiture automobile

(30) Priorität: 30.05.2001 DE 10126195
(43) Veröffentlichungstag der Anmeldung: 04.12.2002
(73) Patentinhaber: DaimlerChrysler AG, 70567 Stuttgart (DE)
(72) Erfinder: Warwel, Jürgen, 70839 Gerlingen (DE); Frank, Thomas, 70619 Stuttgart (DE); Rathje, Klaus, 71157 Hildrizhausen (DE)

(56) Entgegenhaltungen:
- EP-A- 0 992 418
- EP-A- 1 022 199
- DE-A- 2 711 339
- DE-U- 7 822 020
- GB-A- 2 341 147
- PATENT ABSTRACTS OF JAPAN vol. 1998, no. 14, 31. Dezember 1998 (1998-12-31) & JP 10 258773 A (MITSUBISHI MOTORS CORP), 29. September 1998 (1998-09-29)
- PATENT ABSTRACTS OF JAPAN vol. 2000, no. 07, 29. September 2000 (2000-09-29) & JP 2000 108841 A (MAZDA MOTOR CORP), 18. April 2000 (2000-04-18)

## Beschreibung

Die Erfindung betrifft eine Fronthaubenanordnung für einen Personenkraftwagen mit den Merkmalen des Oberbegriffs des Anspruchs 1. Eine derartige Fronthaubenanordnung ist aus der Patenschrift EP-A-1 022 199 bekannt.

Aus der DE 198 46 192 A1 ist eine weitere Fronthaubenanordnung bekannt, die eine heruntergezogene, seitliche Trennfuge zwischen Fronthaube und Kotflügel aufweist. Die Fronthaube besitzt dabei eine innenliegende Innenhaube und eine außenliegende Außenhaube, wobei zwischen Innenhaube und Außenhaube eine energieabsorbierende Zwischenlage angeordnet ist. Die Innenhaube weist in einem zur Trennfuge benachbarten seitlichen Randbereich eine Versteifungszone auf, die bei verschlossener Fronthaube direkt auf einen seitlichen Tragkörper der Fahrzeugkarosserie aufgestützt ist. Die Außenhaube ist von der Innenhaube getragen und weist einen seitlichen Randbereich auf, dessen Endkante an die Trennfuge angrenzt. Der Randbereich der Innenhaube weist einen Verbindungssteg auf, über den die Versteifungszone mit dem Randbereich der Außenhaube, nämlich mit deren Endkante, verbunden ist.

Durch diese Bauweise der Fronthaubenanordnung kann einerseits eine relativ hohe Haubenstabilität und andererseits eine relativ leichte, energieabsorbierende Verformung der Haube beim Aufprall eines Fußgängers erreicht werden. Die nach unten gezogenen Randbereiche bewirken dabei eine hohe Abstützstabilität, während der mittlere Haubenbereich relativ flach und energieabsorbierend verformbar gehalten werden kann.

Hierdurch kann eine Verletzungsgefahr bei einem Fußgänger-Aufprall reduziert werden.

Aus der DE 27 11 339 A1 ist eine weitere Fronthaubenanordnung für einen Personenkraftwagen bekannt, die sich ebenfalls mit dem Problem beschäftigt, Fußgängerverletzungen beim Aufprall auf die Fronthaube zu mildern. Zu diesem Zweck wird die Fronthaube in Vertikalrichtung nachgiebig ausgestaltet. Hierbei wird zur Erzielung einer ausreichenden vertikalen Nachgiebigkeit der Effekt ausgenutzt, daß jede im Querschnitt gewölbte Fronthaube unter vertikal einwirkenden Kräften zu einer seitlichen Ausspreizung neigt. Um diesen Effekt zur Vergrößerung der vertikalen Nachgiebigkeit auszunutzen, wird vorgeschlagen, die seitlichen Endbereiche der Fronthaube aus dem Abstützungsbereich der angrenzenden Karosserieteile zu entfernen, um dadurch der Haube einen weiteren Deformationsweg zu bieten. Im seitlichen Randbereich der Fronthaube wird auf der Innenseite der Haube ein Verstärkungsblech angeordnet, das eine nach außen abfallende Führungskontur bildet. Das Verstärkungsblech und die Fronthaube liegen an ihrem unteren Ende auf einem nachgiebigen Gummiprofil auf, dessen Oberseite eine nach außen abfallende Schrägfläche aufweist. Wenn bei einem Unfall auf die Haube von oben eine Kraft ausgeübt wird, kann es zu einem Zusammenwirken der geneigten Führungskontur des Verstärkungsblechs mit der Schrägfläche des Gummiprofils kommen, wodurch der Randbereich der Haube auseinandergespreizt wird und einen zusätzlichen Deformationsweg erhält.

Die vorliegende Erfindung beschäftigt sich mit Problem, für eine Fronthaubenanordnung der eingangs genannten Art eine Ausführungsform anzugeben, bei der das Ausspreizen der Fronthaube verbessert ist, um so die Dämpfungswirkung beim Fußgängeraufprall zu erhöhen.

Dieses Problem wird erfindungsgemäß durch eine Fronthaubenanordnung mit den Merkmalen des Anspruchs 1 gelöst. Bei der Erfindung ist die Versteifungszone bei verschlossener Fronthaube an Anschlagmitteln seitlich nach außen abgestützt, wobei diese Anschlagmittel am Tragkörper der Fahrzeugkarosserie befestigt sind. Durch diese Bauweise ergibt sich bei einer Krafteinwirkung von oben zwangsläufig eine Deformation im Randbereich der Innenhaube, wodurch sich durch die gewählte Kopplung zwischen Innenhaube und Außenhaube zwangsläufig der Randbereich der Außenhaube nach außen ausspreizt. Insgesamt ergibt sich durch die erfindungsgemäße Anordnung eine erhöhte Sicherheit dafür, daß die Randbereiche der Außenhaube beim Fußgängeraufprall ausspreizen, mit der Folge, daß in vertikaler Richtung mit hoher Zuverlässigkeit ein vergrößerter Verformungs- und Dämpfungsweg gewährleistet werden kann.

Bei einer Weiterbildung kann der wenigstens eine Verbindungssteg an einer von der Trennfuge entfernten Anbindungsstelle mit dem Randbereich der Außenhaube verbunden sein, wobei die Anschlagmittel auf einer von der Endkante des Randbereichs der Außenhaube abgewandten Seite einer in Fahrzeuglängsrichtung und durch diese Anbindungsstelle verlaufenden Vertikalebene angeordnet sind, wobei außerdem der wenigstens eine Verbindungssteg im Bereich dieser Anbindungsstelle eine Sollknickstelle besitzt. Bei dieser Bauweise ist die Endkante des Außenhauben-Randbereichs frei, d.h. ohne direkte Anbindung an die Innenhaube. Hierdurch kann die Außenhaube in ihren Randbereichen leichter ausspreizen. Die gewählte Anbindungsstelle ergibt in Verbindung mit der Sollknickstelle eine Kinematik, die bei einem Fußgängeraufprall zwangsläufig ein Ausspreizen der Außenhauben-Randbereiche bewirkt.

Bei einer besonders vorteilhaften Weiterbildung kann der Randbereich der Innenhaube wenigstens einen Quersteg aufweisen, der sich zwischen zwei benachbarten Verbindungsstegen erstreckt, mit seinem unteren Ende an dem Randbereich der Außenhaube im Bereich deren Endkante befestigt ist und mit seinem oberen Ende außerhalb des Randbereichs der Außenhaube von der Innenhaube ausgeht. Mit Hilfe eines derartigen Querstegs wird für die Endkante am Randbereich der Außenhaube eine Zwangsverstellung erreicht, die sich bei einer Deformation der Fronthaube aufgrund einer vertikalen Krafteinwirkung ergibt.

Bei einer alternativen Ausführungsform kann der wenigstens eine Verbindungssteg am Randbereich der Außenhaube im Bereich deren Endkante befestigt sein, wobei der wenigstens eine Verbindungssteg zwischen der Versteifungszone und der Endkante länger ausgebildet ist als eine durch die Versteifungszone und die Endkante laufende gerade Verbindungsstrecke. Durch diese Bauweise wird beim Ausspreizen der Außenhaube der jeweilige Verbindungssteg in die Länge gezogen, wobei dieser der Ausspreizbewegung der Außenhaube eine nach unten gerichtete Bewegungsrichtung aufzwingt. Hierdurch kann im Bereich der sich ausspreizenden Außenhaube eine Verletzungsgefahr reduziert werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Es zeigen, jeweils schematisch,
- Fig. 1: eine Schnittansicht auf einen seitlichen Randbereich einer Fronthaubenanordnung nach der Erfindung bei einer ersten Ausführungsform,
- Fig. 2: eine Schnittansicht wie in Fig. 1, jedoch bei einer zweiten Ausführungsform,
- Fig. 3: eine Schnittansicht wie in Fig. 1, jedoch bei einer dritten Ausführungsform,
- Fig. 4: eine Schnittansicht wie in Fig. 3, jedoch während einer vertikalen Krafteinwirkung,
- Fig. 5: eine Schnittansicht durch eine Fronthaubenanordnung bei einer vierten Ausführungsform und bei einer seitlichen vertikalen Krafteinwirkung und
- Fig. 6: eine Ansicht wie in Fig. 5, jedoch bei einer mittigen vertikalen Krafteinwirkung sowie bei einer Weiterbildung.

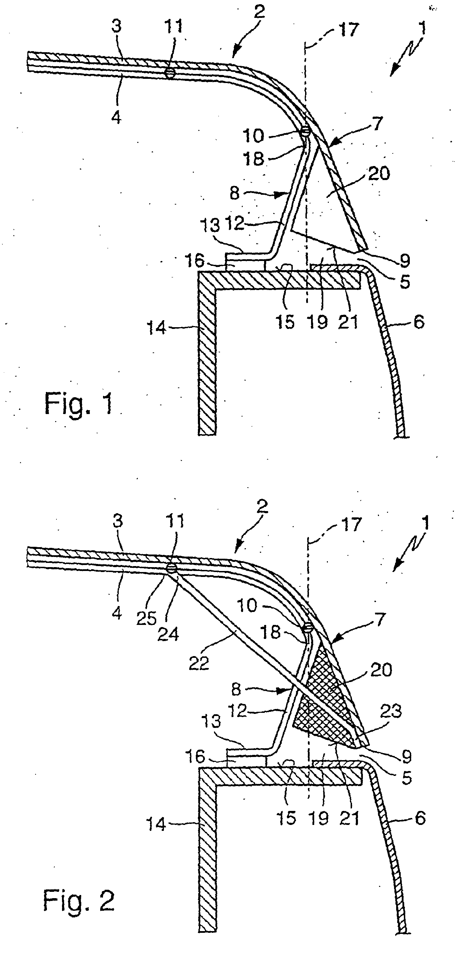

Entsprechend den Fig. 1 bis 6 weist bei einer erfindungsgemäßen Fronthaubenanordnung 1 eine Fronthaube 2 eine außenliegende Außenhaube 3 und eine innenliegende Innenhaube 4 auf. Bei der Fronthaube 2 handelt es sich üblicherweise um eine Motorhaube eines Personenkraftwagens; ebenso sind Personenkraftwagen bekannt, bei denen die Fronthaube 2 als Kofferraumhaube dient. Bei dieser Fronthaubenanordnung 1 ist die Fronthaube 2 so ausgebildet, daß eine Trennfuge 5 zwischen Fronthaube 2 und einem Kotflügel 6 seitlich heruntergezogen ist. Dementsprechend weisen die Außenhaube 3 und die Innenhaube 4 jeweils einen seitlichen Randbereich 7 bzw. 8 auf. Der Randbereich 7 der Außenhaube 3 besitzt eine Endkante 9, die an die Trennfuge 5 angrenzt. die Außenhaube 3 ist von der Innenhaube 4 getragen, wobei gemäß den Fig. 1 und 2 geeignete Anbindungsstellen 10 und 11 beispielsweise durch Klebverbindungen realisiert sein können.

Bei den Ausführungsformen der Fig. 1 bis 4 weist der Randbereich 8 der Innenhaube 4 wenigstens einen Verbindungssteg 12 auf, der in eine Versteifungszone 13 des Randbereichs 8 der Innenhaube 4 übergeht. Über diesen Verbindungssteg 12 ist die Versteifungszone 13 mit dem Randbereich 7 der Außenhaube 3 verbunden.

Im Bereich der Fronthaubenanordnung 1 weist der im übrigen nicht dargestellte Personenkraftwagen an jeder Seite einen seitlichen Tragkörper 14 auf, der einen Bestandteil der Fahrzeugkarosserie bildet und beispielsweise durch einen oberen Längsträger gebildet ist, an dem außerdem der Kotflügel 6 angebracht ist. An diesem Tragkörper 14 sind an einer der Fronthaube 2 zugewandten Oberseite 15 Anschlagmittel 16 befestigt, an denen sich die Versteifungszone 13, insbesondere formschlüssig, seitlich zumindest nach außen abstützt, wenn die Fronthaube 2 geschlossen ist.

Entsprechend den Ausführungsformen der Fig. 1 und 2 ist der Verbindungssteg 12 an einer von der Trennfuge 5 entfernten Stelle, hier bei der Anbindungsstelle 10, mit dem Randbereich 7 der Außenhaube 3 verbunden, wodurch die Endkante 9 dieses Randbereichs 7 relativ ungebunden und frei an der Trennfuge 5 angeordnet ist. In den Fig. 1 und 2 ist eine gedachte Vertikalebene 17 eingezeichnet, die sich in Fahrzeuglängsrichtung, also senkrecht zur Zeichnungsebene erstreckt und durch die Anbindungsstelle 10 verläuft. Bezüglich dieser Vertikalebene 17 sind die Anschlagmittel 16 auf einer anderen Seite angeordnet als die Endkante 9 der Außenhaube 3. Außerdem sind die Anschlagmittel 16 von dieser Vertikalebene 17 beabstandet angeordnet, wodurch der Verbindungssteg 12 geneigt gegenüber dieser Vertikalebene 17 verläuft. Im übrigen erstreckt sich dieser Verbindungssteg 12 im wesentlichen geradlinig zwischen der Anbindungsstelle 10 und der Versteifungszone 13. Im Bereich der Anbindungsstelle 10 weist der Verbindungssteg 12 eine Sollknickstelle 18 auf.

Unterhalb der Verbindungsstelle 10 ist zwischen dem Randbereich 7 der Außenhaube 3 und dem Randbereich 8 der Innenhaube 4 ein Hohlraum 19 ausgebildet, der hier von einem Füllkörper 20 größtenteils ausgefüllt ist. Dieser Füllkörper 20 besteht aus einem energieabsorbierenden Material und kann an seiner Unterseite eine Gleitflanke 21 aufweisen.

Grundsätzlich kann ein einziger Verbindungssteg 12 vorgesehen sein, der sich über die gesamte Längserstreckung der Innenhaube 4 erstreckt. Um die Steifigkeit der Innenhaube 4 zu reduzieren, wird jedoch eine Ausführungsform bevorzugt, bei der mehrere Verbindungsstege 12 vorgesehen sind, die voneinander in Fahrzeuglängsrichtung beabstandet sind. Entsprechend Fig. 2 kann zwischen zwei benachbarten Verbindungsstegen 12 wenigstens ein Quersteg 22 angeordnet sein, der mit einem unteren Ende 23 im Bereich der Endkante 9 am Randbereich 7 der Außenhaube 3 befestigt ist. Mit seinem oberen Ende 24 geht dieser Quersteg 22 außerhalb des Randbereichs 7 der Außenhaube 3 von der Innenhaube 4 aus. Gemäß Fig. 2 kann dieser Quersteg 22 dabei von der Innenhaube 4 abgewinkelt sein. Ebenso ist eine Ausführungsform möglich, bei welcher der Quersteg 22 als separates Bauteil ausgebildet und an der Innenhaube 4 befestigt ist. Zweckmäßig ist die Innenhaube 4 im Bereich des oberen Endes 24 des Querstegs 22 mit der Außenhaube 3 verbunden; dementsprechend befindet sich die Anbindungsstelle 11 hier am oberen Ende 24 der Querstegs 22.

Der Quersteg 22 ist bei der hier gezeigten, bevorzugten Ausführungsform so ausgestaltet, daß er sich zwischen seinen Enden 23 und 24 im wesentlichen geradlinig erstreckt. Des weiteren ist im Bereich des oberen Endes 24 eine Sollknickstelle 25 ausgebildet, die außerdem einen Übergang zwischen dem oberen Ende 24 und der Innenhaube 4 bildet.

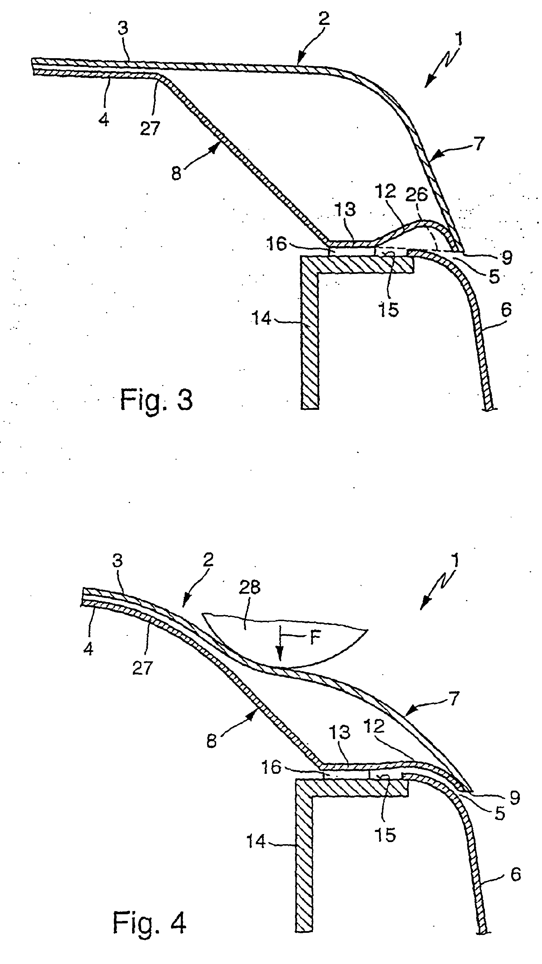

Entsprechend den Fig. 3 und 4 kann der wenigstens eine Verbindungssteg 12 bei einer anderen Ausführungsform im Bereich der Endkante 9 an der Außenhaube 3 befestigt sein. Bei dieser besonderen Ausführungsform ist dieser Verbindungssteg 12 so geformt, daß er in einem in Fig. 3 wiedergegebenen Ausgangszustand länger ist als eine in Fig. 3 mit unterbrochener Linie eingetragene geradlinige Verbindungsstrecke 26, die durch die Versteifungszone 13 und durch die Endkante 9 verläuft. Bei der hier gezeigten Ausführungsform weist der Verbindungssteg 12 einen bezüglich dieser Verbindungsstrecke 26 nach oben gewölbten Verlauf auf. Grundsätzlich sind jedoch auch andere Formgebungen für den Verbindungssteg 12 möglich.

In der hier gezeigten Ausführungsform zeigt der Randbereich 8 der Innenhaube 4 zwischen der Verbindungszone 13 und einem daran anschließenden Abschnitt der Innenhaube 4 einen geradlinigen Verlauf auf. Dabei ist dieser geradlinige Randbereich 8 der Innenhaube 4 zur Verbindungszone 13 hin nach unten geneigt abfallend ausgebildet.

Ein Übergangsbereich zwischen der Innenhaube 4 und deren Randbereich 8 ist hier als Sollknickstelle 27 ausgeformt.

In Fig. 4 ist ein Zustand dargestellt, bei dem eine vertikale Kraft F auf die Fronthaube 2 bei den Randbereichen 7 und 8 einwirkt. Beispielsweise wird diese Vertikalkraft F durch einen von oben auf die Fronthaube 2 aufprallenden, nur teilweise dargestellten Körper 28 in die Fronthaube 2 eingeleitet.

Durch die Anschlagmittel 16 ist der Randbereich 8 der Innenhaube 4 seitlich nach außen abgestützt, so daß die Verformungsenergie verstärkt an der Außenhaube 3 angreift. Die Verformung des Randbereichs 7 der Außenhaube 3 bewirkt eine nach außen gerichtete Ausspreizung dieses Randbereichs 7. Da die Endkante 9 dieses Randbereichs 7 über den Verbindungssteg 12 mit der fixierten Versteifungszone 13 verbunden ist, bewirkt die Ausspreizung des Randbereichs 7 der Außenhaube 3 eine Verformung dieses Verbindungsstegs 12 im Sinne einer Längung. Dabei bewirkt die vorgegebene Form des Verbindungsstegs 12, daß die Endkante 9 beim Ausspreizen des Randbereichs 7 zusätzlich zur nach außen gerichteten Bewegung eine nach unten gerichtete Bewegung durchführt. Insoweit bleibt die Endkante 9 relativ nahe am Kotflügel 6, wodurch eine Verletzungsgefahr in diesem Bereich reduziert ist.

Die Sollknickstelle 27 der Innenhaube 4 unterstützt dabei ein Aufrichten der Innenhaube 4 sowie der Außenhaube 3 außerhalb der Randbereiche 7 und 8, wodurch bei dieser Aufprallvariante mehr Aufprallenergie absorbiert werden kann.

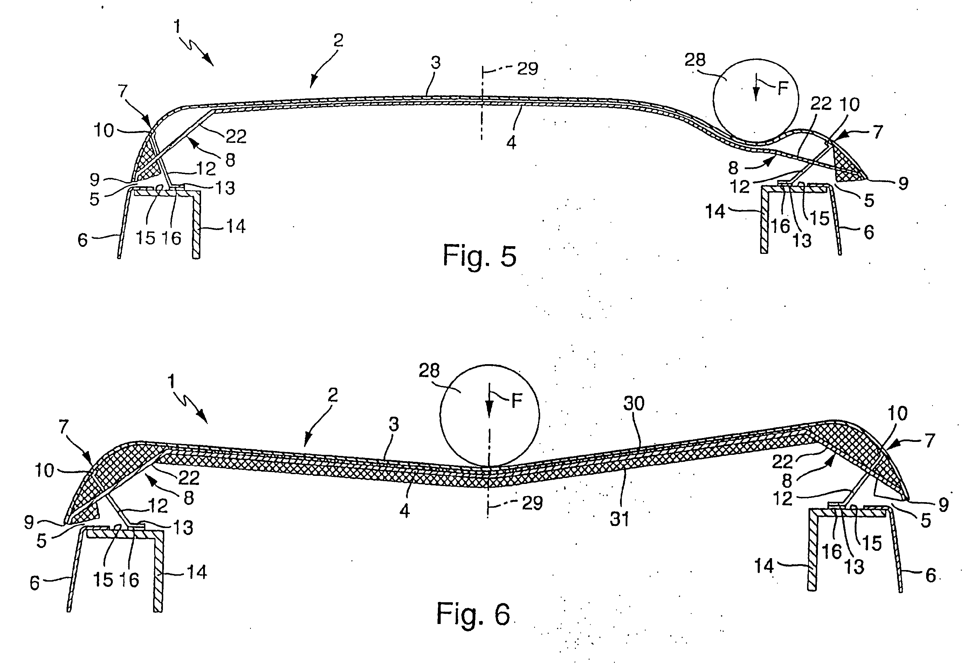

Während bei den Ausführungsformen der Fig. 1 bis 4 der wenigstens eine Verbindungssteg 12 durch einen Bestandteil des Randbereichs 8 der Innenhaube 4 gebildet ist, bildet der wenigstens eine Verbindungssteg 12 bei den Ausführungsformen der Fig. 5 und 6 jeweils ein separates Bauteil, das insbesondere von der Innenhaube 4 unabhängig ist. Diese Ausführungsformen stellen hier Abwandlungen der Ausführungsform gemäß Fig. 2 dar, so daß der Randbereich 8 der Innenhaube 4 jeweils wenigstens einen Quersteg 22 besitzt.

In Fig. 5 ist eine Vertikalkrafteinwirkung außerhalb einer Mitte 29 der Fronthaube 2 dargestellt. Die gemäß Fig. 5 rechts auftreffende Vertikalkraft F erzeugt eine Ausspreizung der rechten Randbereiche 7 und 8 der Außenhaube 3 bzw. der Innenhaube 4. Dabei wird diese Ausspreizung, bei der sich die Endkante 9 seitlich nach außen bewegt, durch den am Tragteil 14 fixierten Verbindungssteg 12 in Verbindung mit dem Quersteg 22 erzwungen, so daß mit hoher Sicherheit für jeden Aufprall dieses Bewegungsverhaltens der Fronthaube 2 gewährleistet werden kann. Insoweit erhöht sich die Personenschutzfunktion der Fronthaube 2.

Bei der Darstellung gemäß Fig. 6 greift die Vertikalkraft F mittig an der Fronthaube 2 an, so daß beide Randbereiche 7,8 der Fronthaube 2 im wesentliche symmetrisch ausgespreizt werden.

Bei der Ausführungsform gemäß Fig. 6 ist zwischen den beiden Hauben 3 und 4 zusätzlich ein Dämmmaterial 30 angeordnet, um den Aufprall zusätzlich zu dämpfen. Darüber hinaus kann an der Innenseite der Innenhaube 4 eine Schicht 31 aus einem energieabsorbierenden Material aufgebracht sein, um auch hierdurch die Aufprallenergie zu absorbieren.

Die Anschlagmittel 16 sind so ausgebildet, daß sie beim Öffnen der Fronthaube 2 ein Abheben der Versteifungszone 13 erlauben und beim Verschließen der Fronthaube 2 selbsttätig mit der Versteifungszone 13 in Eingriff kommen, um die erwünschte seitliche Abstützfunktion zumindest nach außen, vorzugsweise nach außen und nach innen, erfüllen können.

## Patentansprüche

1. Fronthaubenanordnung, insbesondere Motorhaubenanordnung, für einen Personenkraftwagen, mit heruntergezogener seitlicher Trennfuge (5), zwischen Fronthaube (2) und Kotflügel (6), wobei die Fronthaube (2) eine innenliegende Innenhaube (4) und eine außenliegende Außenhaube (3) aufweist, wobei die Fronthaube (2) wenigstens eine Versteifungszone (13) aufweist, die bei verschlossener Fronthaube (2) direkt oder indirekt an einem seitlichen Tragkörper (14) der Fahrzeugkarosserie abgestützt ist, wobei die Außenhaube (3) einen seitlichen Randbereich (7) aufweist, dessen Endkante (9) an die Trennfuge (5) angrenzt, wobei wenigstens ein Verbindungssteg (12) vorgesehen ist, über den die Versteifungszone (13) mit dem Randbereich (7) der Außenhaube (3) verbunden ist,
**dadurch gekennzeichnet,**
- **dass** am Tragkörper (14) der Fahrzeugkarosserie Anschlagmittel (16) befestigt sind,
- **dass** die Versteifungszone (13) bei verschlossener Fronthaube (2) an den Anschlagmitteln (16) seitlich nach außen abgestützt ist.

2. Fronthaubenanordnung nach Anspruch 1,
**dadurch gekennzeichnet,**
**daß** mehrere, voneinander in Fahrzeuglängsrichtung beabstandete Verbindungsstege (12) vorgesehen sind, über welche die Versteifungszone (13) mit dem Randbereich (7) der Außenhaube (3) verbunden ist.

3. Fronthaubenanordnung nach Anspruch 1 oder 2,
**dadurch gekennzeichnet,**
**daß** der wenigstens eine Verbindungssteg (12) an einem zur Trennfuge (5) benachbarten Randbereich (8) der Innenhaube (4) ausgebildet ist.

4. Fronthaubenanordnung nach Anspruch 1 oder 2,
**dadurch gekennzeichnet,**
**daß** der wenigstens eine Verbindungssteg (12) als von der Innenhaube (4) unabhängiges Bauteil ausgebildet ist.

5. Fronthaubenanordnung nach einem der Ansprüche 1 bis 4,
**dadurch gekennzeichnet,**
**daß** der wenigstens eine Verbindungssteg (12) an einer von der Trennfuge (5) entfernten Anbindungsstelle (10) mit dem Randbereich (7) der Außenhaube (3) verbunden ist, wobei die Anschlagmittel (16) auf einer von der Endkante (9) des Randbereichs (7) der Außenhaube (3) abgewandten Seite einer in Fahrzeuglängsrichtung und durch diese Anbindungsstelle (10) verlaufenden Vertikalebene (17) angeordnet sind, wobei der wenigstens eine Verbindungssteg (12) im Bereich dieser Anbindungsstelle (10) eine Sollknickstelle (18) aufweist.

6. Fronthaubenanordnung nach Anspruch 5,
**dadurch gekennzeichnet,**
**daß** sich der wenigstens eine Verbindungssteg (12) im wesentlichen geradlinig zwischen Anbindungsstelle (10) und Versteifungszone (13) erstreckt.

7. Fronthaubenanordnung nach Anspruch 5 oder 6,
**dadurch gekennzeichnet,**
**daß** der wenigstens eine Verbindungssteg (12) geneigt gegenüber der Vertikalebene (17) verläuft.

8. Fronthaubenanordnung nach einem der Ansprüche 5 bis 7,
**dadurch gekennzeichnet,**
**daß** zwischen der den wenigstens einen Verbindungssteg (12) mit dem Randbereich (7) der Außenhaube (3) verbindenden Anbindungsstelle (10) und der Trennfuge (5) ein Füllkörper (20) aus einem energieabsorbierenden Material am wenigstens einen Verbindungssteg (12) und/oder am Randbereich (7) der Außenhaube (3) angebracht ist, der einen unterhalb der Anbindungsstelle (10) zwischen dem wenigstens einen Verbindungssteg (12) und dem Randbereich (7) der Außenhaube (3) gebildeten Hohlraum (19) zumindest teilweise ausfüllt.

9. Fronthaubenanordnung zumindest nach den Ansprüchen 2 und 5,
**dadurch gekennzeichnet,**
**daß** der Randbereich (8) der Innenhaube (4) wenigstens eine Quersteg (22) aufweist, der sich zwischen zwei Verbindungsstegen (12) erstreckt, mit seinem unteren Ende (23) an dem Randbereich (7) der Außenhaube (3) im Bereich deren Endkante (9) befestigt ist und mit seinem oberen Ende (24) außerhalb des Randbereichs (7) der Außenhaube (3) von der Innenhaube (4) ausgeht.

10. Fronthaubenanordnung nach Anspruch 9,
**dadurch gekennzeichnet,**
**daß** die Innenhaube (4) im Bereich des oberen Endes (24) des wenigstens einen Querstegs (22) mit der Außenhaube (3) verbunden ist.

11. Fronthaubenanordnung nach Anspruch 9 oder 10,
**dadurch gekennzeichnet,**
**daß** ein Übergang zwischen dem oberen Ende (24) des wenigstens einen Querstegs (22) und der Innenhaube (4) als Sollknickstelle (25) ausgebildet ist.

12. Fronthaubenanordnung nach einem der Ansprüche 9 bis 11,
**dadurch gekennzeichnet,**
**daß** sich der wenigstens eine Quersteg (22) im wesentlichen geradlinig zwischen seinen Enden (23 und 24) erstreckt.

13. Fronthaubenanordnung nach einem der Ansprüche 1 bis 4,
**dadurch gekennzeichnet,**
**daß** der wenigstens eine Verbindungssteg (12) am Randbereich (7) der Außenhaube (3) im Bereich deren Endkante (9) befestigt ist, wobei der wenigstens eine Verbindungssteg (12) zwischen der Versteifungszone (13) und der Endkante (9) in einem Ausgangszustand länger ausgebildet ist als eine durch die Verbindungszone (13) und die Endkante (9) laufende gerade Verbindungsstrecke (26).

14. Fronthaubenanordnung nach Anspruch 13,
**dadurch gekennzeichnet,**
**daß** der wenigstens eine Verbindungssteg (12) bezüglich der Verbindungsstrecke (26) einen nach oben gewölbten Verlauf besitzt.

15. Fronthaubenanordnung nach Anspruch 13 oder 14,
**dadurch gekennzeichnet,**
**daß** die Versteifungszone (14) an einem zur Trennfuge (5) benachbarten Randbereich (8) der Innenhaube (4) ausgebildet ist und daß der Randbereich (8) der Innenhaube (4) zwischen der Verbindungszone (13) und einem daran anschließenden Abschnitt der Innenhaube (4) einen geradlinigen Verlauf aufweist, wobei der Randbereich (8) von der Verbindungszone (13) nach innen geneigt ansteigt.

16. Fronthaubenanordnung nach Anspruch 15,
**dadurch gekennzeichnet,**
**daß** ein Übergangsbereich zwischen Innenhaube (4) und deren Randbereich (8) als Sollknickstelle (27) ausgebildet ist.

## Claims

1. A front bonnet arrangement, in particular an engine front bonnet, for a passenger car, having downward sloping lateral dividing gaps (5) between front bonnet (2) and wing (6), the front bonnet (2) having an interior inner bonnet (4) and an exterior outer bonnet (3), the front bonnet (2) having at least one reinforcing zone (13) which is supported directly or indirectly on a lateral structural member (14) of the vehicle bodywork when the front bonnet (2) is closed, the outer bonnet (3) having a lateral edge area (7) with an end edge (9) which lies adjacent to the dividing gap (5), at least one connecting web (12) being provided by means of which the reinforcing zone (13) is connected to the edge area (7) of the outer bonnet (3),
**characterised in that**
- stopping means (16) are fixed to the structural member (14) of the vehicle bodywork,
- when the bonnet (2) is open the reinforcing zone (13) is supported laterally outwards on the stopping means (16).

2. A front bonnet arrangement in accordance with claim 1,
**characterised in that**
there are provided several connecting webs (12) which are spaced a certain distance apart along the longitudinal axis of the vehicle by means of which the reinforcing zone (13) is connected to the edge area (7) of the outer bonnet (3).

3. A front bonnet arrangement in accordance with claim 1 or 2,
**characterised in that**
the at least one connecting web (12) is formed on an edge area (8) of the inner bonnet (4) in the vicinity of the dividing gap (5).

4. A front bonnet arrangement in accordance with claim 1 or 2,
**characterised in that**
the at least one connecting web (12) is designed as a component which is independent of the inner bonnet (4).

5. A front bonnet arrangement in accordance with one of claims 1 to 4,
**characterised in that**
the at least one connecting web (12) is connected to the edge area (7) of the outer bonnet (3) at a connecting point (10) distant from the dividing gap (5), the stopping means (16) being positioned on a side of a vertical plane (17) running along the length of the vehicle and through said connecting point (10) which faces away from the end edge (9) of the edge area (7) of the outer bonnet (3), the at least one connecting web (12) having a pre-determined bending point (18) in the area of said connecting point (10).

6. A front bonnet arrangement in accordance with claim 5,
**characterised in that**
the at least one connecting web (12) extends essentially in a straight line between the connecting point (10) and the reinforcing zone (13).

7. A front bonnet arrangement in accordance with claim 5 or 6,
**characterised in that**
the at least one connecting web (12) runs at an angle in relation to the vertical plane.

8. A front bonnet arrangement in accordance with one of claims 5 to 7,
**characterised in that**
fitted to the at least one connecting web (12) and/or to the edge area (7) of the outer bonnet (3) between the connecting point (10) which connects the at least one connecting web (12) to the edge area (7) of the outer bonnet (3) and the dividing gap (5) is a filler element (20) made of an energy absorbing material which at least partially fills a hollow space (19) formed below the connecting point (10) between the at least one connecting web (12) and the edge area (7) of the outer bonnet (3).

9. A front bonnet arrangement at least in accordance with claims 2 and 5,
**characterised in that**
the edge area (8) of the inner bonnet (4) has at least one transverse web (22) which extends between two connecting webs (12) with its lower end (23) fixed to the edge area (7) of the outer bonnet (3) in the area of its end edge (9) and its upper end (24) extending from the inner bonnet (3) outside the edge area (7) of the outer bonnet (3).

10. A front bonnet arrangement in accordance with claim 9,
**characterised in that**
the inner bonnet (4) is connected to the outer bonnet (3) in the area of the upper end (24) of the at least one transverse web (22).

11. A front bonnet arrangement in accordance with claim 9 or 10,
**characterised in that**
a transition between the upper end (24) of the at least one transverse web (22) and the inner bonnet (4) is designed as a pre-determined bending point.

12. A front bonnet arrangement in accordance with one of claims 9 to 11,
**characterised in that**
the at least one transverse web (12) extends essentially in a straight line between its ends (23 and 24).

13. A front bonnet arrangement in accordance with one of claims 1 to 4,
**characterised in that**
the at least one connecting web (12) is fixed to the edge area (7) of the outer bonnet (3) in the area of its end edge (9), in an initial condition the at least one connecting web (12) is longer between the reinforcing zone (13) and the end edge (9) than a straight connecting line (26) running through the connecting zone (13) and the end edge (9).

14. A front bonnet arrangement in accordance with claim 13,
**characterised in that**
the at least one connecting web (12) has curves upwards in relation to the connecting line (26).

15. A front bonnet arrangement in accordance with claim 13 or 14,
**characterised in that**
the reinforcing zone (14) is formed in an edge area (8) of the inner bonnet (4) in the vicinity of the dividing gap (5), and the edge area (8) of the inner bonnet (4) runs in a straight line between the connecting zone (13) and an adjacent section of the inner bonnet (4), the edge area (8) rising inwards at an angle from the connecting zone (13).

16. A front bonnet arrangement in accordance with claim 15,
**characterised in that**
a transitional area between the inner bonnet (4) and its edge area (8) is designed as a pre-determined bending point (27).

## Revendications

1. Système de capot frontal, notamment système de capot-moteur, pour voiture particulière, comprenant un plan de joint latéral étiré vers le bas (5) entre le capot frontal (2) et le garde-boue (6), le capot frontal (2) incluant un capot interne placé à l'intérieur (4) et un capot externe placé à l'extérieur (3), le capot frontal (2) comportant au moins une zone de raidissement (13) qui, lorsque le capot frontal (2) est fermé, s'appuie directement ou indirectement sur un corps support latéral (14) de la carrosserie du véhicule, le capot externe (3) présentant une zone périphérique latérale (7) dont l'arête terminale (9) est adjacente au plan de joint (5), tandis qu'il est prévu au moins une bride de liaison (12) par laquelle la zone de raidissement (13) est reliée à la zone périphérique (7) du capot externe (3),
**caractérisé en ce que**
- des moyens de butée (16) sont fixés sur le corps support (14) de la carrosserie du véhicule,
- la zone de raidissement (13), lorsque le capot frontal (2) est fermé, s'appuie latéralement vers l'extérieur sur les moyens de butée (16).

2. Système de capot frontal selon la revendication 1,
**caractérisé en ce que**
il est prévu plusieurs brides de liaison (12) espacées les unes des autres dans le sens longitudinal du véhicule et par lesquelles la zone de raidissement (13) est reliée à la zone périphérique (7) du capot externe (3).

3. Système de capot frontal selon la revendication 1 ou 2,
**caractérisé en ce que**
l'au moins une bride de liaison (12) est réalisée sur une zone périphérique (8) voisine du plan de joint (5) du capot interne (4).

4. Système de capot frontal selon la revendication 1 ou 2,
**caractérisé en ce que**
l'au moins une bride de liaison (12) est réalisée sous forme d'une composante indépendante du capot interne (4).

5. Système de capot frontal selon l'une quelconque des revendications 1 à 4,
**caractérisé en ce que**
l'au moins une bride de liaison (12) est reliée, au niveau d'un point de jonction (10) éloigné du plan de joint (5), à la zone périphérique (7) du capot externe (3), tandis que les moyens de butée (16) sont disposés sur un côté détourné de l'arête terminale (9) de la zone périphérique (7) du capot externe (3) d'un plan vertical (17) s'étendant dans le sens longitudinal du véhicule en passant par ce point de jonction (10), tandis que l'au moins une bride de liaison (12) présente un point de pliage théorique (18) au niveau de ce point de jonction (10).

6. Système de capot frontal selon la revendication 5,
**caractérisé en ce que**
l'au moins une bride de liaison (12) s'étend sensiblement en ligne droite entre le point de jonction (10) et la zone de raidissement (13).

7. Système de capot frontal selon la revendication 5 ou 6,
**caractérisé en ce que**
l'au moins une bride de liaison (12) s'étend à l'oblique par rapport au plan vertical (17).

8. Système de capot frontal selon l'une quelconque des revendications 5 à 7,
**caractérisé en ce que**,
entre le point de jonction (10) reliant l'au moins une bride de liaison (12) à la zone périphérique (7) du capot externe (3) et le plan de joint (5), est installé, sur au moins une bride de liaison (12) et/ou sur la zone périphérique (7) du capot externe (3), un corps de remplissage (20) en matériau absorbant l'énergie, remplissant du moins partiellement une cavité (19) constituée en dessous du point de jonction (10) entre l'au moins une bride de liaison (12) et la zone périphérique (7) du capot externe (3).

9. Système de capot frontal selon au moins les revendications 2 et 5,
**caractérisé en ce que**
la zone périphérique (8) du capot interne (4) comporte au moins une traverse (22) qui s'étend entre deux brides de liaison (12), est fixée par son extrémité inférieure (23) à la zone périphérique (7) du capot externe (3) au niveau de son arête terminale (9) et sort par son extrémité supérieure (24), à l'extérieur de la zone périphérique (7) du capot externe (3), du capot interne (4).

10. Système de capot frontal selon la revendication 9,
**caractérisé en ce que**
le capot interne (4), au niveau de l'extrémité supérieure (24) de l'au moins une traverse (22), est relié au capot externe (3).

11. Système de capot frontal selon la revendication 9 ou 10,
**caractérisé en ce que**
une transition est établie entre l'extrémité supérieure (24) de l'au moins une traverse (22) et le capot interne (4) sous forme de point de pliage théorique (25).

12. Système de capot frontal selon l'une quelconque des revendications 9 à 11,
**caractérisé en ce que**
l'au moins une traverse (22) s'étend sensiblement en ligne droite entre ses extrémités (23 et 24).

13. Système de capot frontal selon l'une quelconque des revendications 1 à 4,
**caractérisé en ce que**
l'au moins une bride de liaison (22) est fixée à la zone périphérique (7) du capot externe (3) au niveau de son arête terminale (9), tandis que l'au moins une bride de liaison (12) est réalisée à l'état initial plus longue entre la zone de raidissement (13) et l'arête terminale (9) qu'un segment de liaison (26) droit passant par la zone de liaison (13) et l'arête terminale (9).

14. Système de capot frontal selon la revendication 13,
**caractérisé en ce que**
l'au moins une bride de liaison (22) présente une extension bombée vers le haut par rapport au segment de liaison (26).

15. Système de capot frontal selon la revendication 13 ou 14,
**caractérisé en ce que**
la zone de raidissement (14) est réalisée sur une zone périphérique (8) voisine du plan de joint (5) du capot interne (4) et que la zone périphérique (8) du capot interne (4) présente, entre la zone de liaison (13) et une section s'y raccordant du capot interne (4), une extension en ligne droite, tandis que la zone périphérique (8) monte à l'oblique de la zone de liaison (13) vers l'intérieur.

16. Système de capot frontal selon la revendication 15,
**caractérisé en ce que**
une zone de transition est établie entre le capot interne (4) et sa zone périphérique (8) sous forme de point de pliage théorique (27).
